# EUROPEAN PATENT SPECIFICATION

(11) **EP 3 398 278 B1**
(45) Date of publication and mention of the grant of the patent: **20.07.2022**
(21) Application number: 15820180.6
(22) Date of filing: 30.12.2015
(51) Int. Cl.: H04L 5/00

(54) **UPLINK REFERENCE SIGNALS ALLOCATION BASED ON UE PRIORITY**
UPLINK-REFERENZSIGNALZUORDNUNG BASIEREND AUF BENUTZERGERÄTEPRIORITÄT
ATTRIBUTION DE SIGNAUX DE RÉFÉRENCE DE LIAISON MONTANTE BASÉE SUR UNE PRIORITÉ D'UE

(43) Date of publication of application: 07.11.2018
(73) Proprietor: Telefonaktiebolaget LM Ericsson (PUBL), 164 83 Stockholm (SE)
(72) Inventor: SAXENA, Vidit, 177 34 Järfälla (SE); KARIPIDIS, Eleftherios, 11330 Stockholm (SE); SELÈN, Yngve, 75434 Uppsala (SE); FODOR, Gabor, 16552 Hässelby (SE)
(74) Representative: Zacco Sweden AB
(86) International application number: PCT/EP2015/081386
(87) International publication number: WO 2017/114566

(56) References cited:
- US-A1- 2009 196 251
- US-A1- 2010 165 930
- US-A1- 2013 230 018
- US-A1- 2014 023 012

## Description

### TECHNICAL FIELD

The present disclosure generally relates to uplink reference signals, and especially relates to allocating uplink reference signals taking into account potential pilot contamination.

### BACKGROUND

In a typical cellular system, also referred to as a wireless communications network, wireless terminals, also known as mobile stations or user equipments communicate via a Radio Access Network, RAN, to one or more core networks. The radio access network may comprise a plurality of access points, AP, or base stations, BS that communicate with the user equipments, UEs, by means of radio signals and provide access to the core network.

The Third Generation Partnership Project, 3GPP, has established a plurality of generations of mobile communication standards. The Universal Mobile Telecommunications System, UMTS, is a third generation mobile communication system, which evolved from the Global System for Mobile Communications, GSM, to provide mobile communication services based on Wideband Code Division Multiple Access, WCDMA, access technology. Long-Term Evolution, LTE, often being referred to as fourth generation, has been specified to increase the capacity and speed using orthogonal frequency division multiplexing, OFDM, in the downlink and Discrete Fourier Transform (DFT)-spread OFDM, also being referred to as single-carrier frequency-division multiple access (SC-FDMA) in the uplink.

With the ever increasing demands to increase the traffic volume and to reduce the latency, so-called fifth generation (5G) systems are currently been specified by 3GPP. Important aspects of 5G are to densify the network, and to use more spectrum. Additional available frequencies for next generation (5G) networks that are practically usable are located in very high frequency ranges (compared to the frequencies that have so far been used for wireless communication), such as 10 GHz and above.

One technique to increase the radio capacity is beam forming. A multi-antenna base station, BS, or access point, AP, may direct radio transmission in a chosen angular direction toward the direction of the expected UE and hence reducing the overall interference level for the whole cell.

A multi-antenna AP may exploit channel state information (CSI) for beamforming, e.g. by precoding the downlink signal and processing the uplink signal. An AP according to LTE may estimate the physical uplink channel using reference signals (RS) in uplink, typically a Demodulation Reference Signal (DMRS) and/or Sounding Reference Signals (SRS) that occupy some resources with respect to time and frequency, in the following also being referred to as t-f resources.

According to 3GPP LTE specifications, DMRS in uplink transmission is used at the base station for channel estimation and for coherent demodulation which comes along with the Physical Uplink Shared Channel (PUSCH) and Physical Uplink Control Channel (PUCCH). SRS is used by the base station to estimate the uplink channel quality over a wider bandwidth.

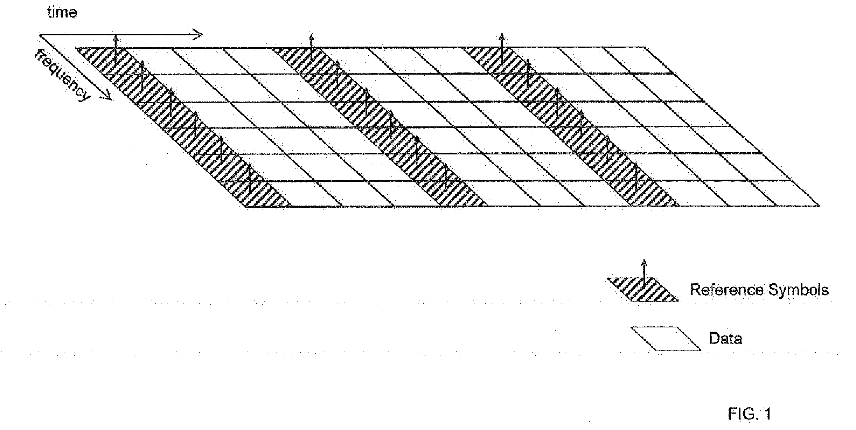

Fig. 1 depicts a time frequency, t-f, resource grid with exemplary uplink reference symbols, RS, and data symbols.

If two or more UEs need to transmit RS on overlapping t-f resources, they may use orthogonal RSs for their channels to be successfully resolved at the BS. This orthogonality may be achieved, for e.g., by deriving the RS from orthogonal Zadoff-Chu, ZC, sequences. As such, the UEs within a cell that are scheduled on overlapping t-f resources may attempt to use different ZC sequences. Interference from uplink RS transmissions in nearby cells is avoided as long as they use different of ZC sequences for overlapping t-f resources. Additionally for UEs that use the same ZC sequence, orthogonality may be achieved with appropriate phase rotation of the ZC sequence.

In LTE downlink, the UE may estimate the channel to each AP antenna port based on cell specific reference signals (CRS), CSI-RS and downlink demodulation reference signals (DMRS). It may report this information to the AP over a control channel. Obviously, the overhead of RS and feedback resources increases with the number of AP antennas. However in case of Time-Division Duplex (TDD) operation, the uplink and the downlink wireless channels are often approximately reciprocal. In this case, the AP can estimate the downlink channel from the uplink channel estimates. This may be especially useful in case of large number of BS antenna ports to reduce the overhead.

An important use of CSI at the AP is to generate spatially separate beams that carry independent data streams. When these beams are used to serve multiple UEs, this technique is called multi-user MIMO (MU-MIMO).

In LTE uplink, MU-MIMO is supported by assigning orthogonal reference signals to the multiplexed UEs. In LTE downlink, MU-MIMO (supported by transmission modes 5 (multi-user MIMO), 8 (dual-layer beamforming) and 9 (8 layer transmission)) relies on feedback of CSI by the UE. In both cases MU-MIMO may be meaningful only for UEs that are spatially well-separated, such that the respective channels are also mutually orthogonal.

Massive MIMO, also referred to as very large MIMO (VL-MIMO) or full dimension MIMO (FD-MIMO), an important technique for 5G systems, relies having (and accessing from baseband) a very large number of BS antennas (e.g. in the order of hundreds) for improving the spatial resolution (and the link budget at millimeter-wave frequencies). This enables the BS to design simple (linear) beamforming techniques both for uplink and downlink to heavily mitigate inter-user interference. This, in turn, makes it possible to serve several (possibly in the order of tens) UEs on overlapping t-f resources with UE-specific beams, provided the BS has good-enough channel estimates to design them. Downlink CSI acquisition is most likely to be viable via reciprocity in TDD mode, as discussed above. At millimeter wave frequencies, TDD will most likely be the most viable duplex solution, since it is very likely that spectrum won't be paired.

The number of orthogonal RS is fundamentally limited by the number of t-f resources reserved for channel estimation (typically 12 t-f resources per Physical Resource Block, PRB, in uplink). The channel estimates are used for coherent processing, and are valid only within the channel coherence interval (typically a few PRB long). Assigning more resources for channel estimation would mean a larger number of orthogonal RS but fewer resources for coherent data processing, i.e. larger overhead.

In current systems, typically there are adequate orthogonal RS resources (within a channel coherence interval) to be used by UEs in a multi-cell service area. However in massive MIMO systems, it is desirable to serve many more UEs as discussed above, e.g. to be able to fulfill 5G capacity requirements. Also, in millimeter wave frequencies, it is expected that UEs will also have many antennas and employ beamforming techniques to improve the link budget. Thus, the number of orthogonal RSs may get exhausted because of several UE antenna ports, especially in t-f selective propagation environments. US2013/230018A1 describes a radio base station of an adaptive array scheme for applying an antenna weight to a plurality of antennas. US2010/165930A1 describes a method for allocating uplink reference signals in a mobile communication system.

### SUMMARY

The invention is defined by the independent claims. Further, embodiments of the invention are defined by the claims. Moreover, examples, embodiments and descriptions, which are not covered by the claims are presented not as embodiments of the invention, but as background art or examples useful for understanding the invention. It is an object of the present invention to improve an allocation of uplink reference signals.

This object is solved by the subject-matter according to the independent claims. Preferred embodiments are subject of the dependent claims, the description and the figures.

An embodiment concerns a method for allocating an uplink reference signal to a user equipment, UE, located in a cell area comprising one or a plurality of cells served by one or a plurality of access nodes, wherein the method comprises associating a priority to the UE, and allocating an uplink reference signal to the UE based on the priority level. The priority level may be determined based on one or a plurality of traffic characteristics of one or a plurality of active applications of the UE, an emergency level of the one or the plurality of applications and/or a subscription level.

In an embodiment, the method comprises the steps of:
- determining one or a plurality of active applications of the UE,
- determining a traffic characteristic or a traffic pattern associated to the one or the plurality of active applications,
- associating a priority level to the UE, wherein the priority level is based on the traffic pattern, and
- allocating an uplink reference signal to the UE based on the priority level.

In an embodiment, the traffic characteristics or traffic pattern for an application is determined by determining application type identification, and retrieving the traffic pattern from a memory keeping stored a plurality of traffic patterns each associated to different application types.

In an embodiment, determining the traffic characteristics or traffic pattern associated to the one or the plurality of active applications comprises determining a level of burstiness of transmitted and/or received data.

In an embodiment one or a plurality of the following levels may be defined for classifying a UE:
- a level of burstiness of transmitted and/or received data,
- an emergency level of the one or the plurality of active applications, and
- a subscription level.

By way of example, the level of burstiness may comprise two levels: a first level associated to streaming traffic and a second level associated to bursty traffic. Alternatively more than two levels may be defined.

By way of example, the emergency level may comprise two levels: a first level associated to emergency traffic and a second level associated to non-emergency traffic. Alternatively more than two levels may be defined.

By way of example, the subscription level may comprise two levels: a first level associated to a privileged handling and a second level associated to a non-privileged handling. Alternatively more than two levels may be defined.

By way of example, a UE classified to each the first level of burstiness, the first level of emergency level and the first level of subscription may get the highest possible priority. A UE classified to each the second level of burstiness, the second level of emergency level and the second level of subscription may get the lowest possible priority. Other combinations may lead to any priority in-between those priority levels.

In an embodiment, it is determined if the priority level of the UE is above a certain priority level. In this case, an uplink reference signal is allocated to the UE that is orthogonal to other reference signals currently assigned to other UEs in the cell area comprising a plurality of cells, e.g. the sell serving the UE an all neighboring cells.

In an embodiment, it is determined if the priority level is not above the certain priority level. In this case, an uplink reference signal is assigned to the UE that is not orthogonal to all the other reference signals currently assigned to other UEs in the cell area.

By way of example, a first set of reference signals that are orthogonal to each other within the whole cell area comprising a plurality of cells is provided or reserved. Further a second set of reference signals that are not orthogonal to all other reference signal within the cell area is provided. A decision whether to allocate a reference signal of the first set or the second set of reference signals is performed in dependency of the determined priority level.

By way of example, deciding whether to allocate a reference signal of the first set or the second set of reference signals comprises determining if the priority level of the UE is above a certain priority level. If it is determined that the priority level is above the certain priority level, an uplink reference signal of the first set of reference signals is allocating. Otherwise an uplink reference signal of the second set of reference signals is allocated.

The reference signal may be one of a: demodulation reference signal and a sounding reference signal as defined in 3GPP LTE specifications.

An embodiment concerns an access point for allocating an uplink reference signal to a UE. The access point may be associated to one cell of a cell area comprising one or a plurality of cells. The access point may comprise:
- An application detecting module adapted for determining one or a plurality of active applications of the UE,
- a traffic pattern determining module adapted for determining a traffic pattern associated to the one or the plurality of active applications, and
- a priority level determining module adapted for associating a priority level to the UE, wherein the priority level is based on the traffic pattern, and
- a reference signal allocation module adapted for allocating an uplink reference signal to the UE based on the priority level.

A further embodiment concerns computer programs comprising instructions being adapted to be stored in a memory of the access point, which, when executed on at least one processor, cause the at least one processor to carry out or support any of the afore-described embodiments.

In the following, detailed embodiments of the present invention shall be described in order to give the skilled person a full and complete understanding. However, these embodiments are illustrative and not intended to be limiting.

### BRIEF DESCRIPTION OF THE DRAWINGS

The accompanying drawings illustrate several aspects of the disclosure, and together with the description serve to explain the principles of the disclosure.
Fig. 1 illustrates an exemplary time frequency resource grid for uplink data transmission;
Fig. 2 illustrates a radio access network comprising an access point or eNB communicating to a plurality of UEs;
Fig. 3a illustrates a situation of uplink reference signal contamination transmitted by UEs of nearby cells;
Fig. 3b illustrates a situation of downlink signal interference in nearby cells;
Fig. 4 illustrates an exemplary sequence of steps performed by a an access point for an allocation of a reference signal to a UE;
Fig. 5 illustrates different collision scenarios;
Fig. 6 illustrates an exemplary reuse scheme of a set of reference signals across different cells;
Fig. 7 is a block diagram of structural units of the access point according to embodiments of the present disclosure; and
Fig. 8 is a block diagram of functional units of the access point according to embodiments of the present disclosure.

### DESCRIPTION

E.g. with MU-MIMO as described above, spatially resolvable beams may be used to provide multiple data streams to a single multi-antenna UE, denoted in LTE as spatial multiplexing or single-user MIMO.

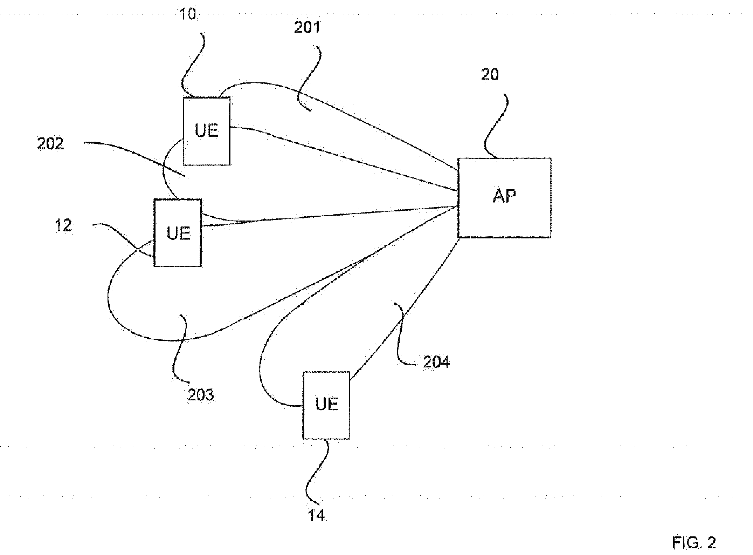

**Fig. 2** shows thereto shows an access point, AP, 20 or a radio access network generating four exemplary spatially resolvable beams 201, 202, 203 and 204 carrying multiple independent data streams to multiple users over the same set of time-frequency resources (resource elements). Fig. 2 by way of example shows a first UE 10, a second UE 12 and a third UE 14 located at different positions within a cell constituted by the access point 20. By way of example, the first UE receives a first data stream of the first beam 201 and a second data stream of the second beam 202. The second UE 12 receives a third data stream of a third beam 203 and the third UE 14 receives a fourth data stream of the fourth beam 204. In order to provide the separated data streams the AP 20 relies on channel state information to exploit the spatial domain.

The radio access network may include one or more instances of wireless communication devices (e.g. conventional user equipments (UE), or machine type communication (MTC) or machine-to-machine (M2M) equipments) and a plurality of radio access nodes or access points capable of communicating with the wireless communication devices along with any additional elements suitable to support communication between wireless communication devices or between a wireless communication device and another communication device (such as a landline telephone).

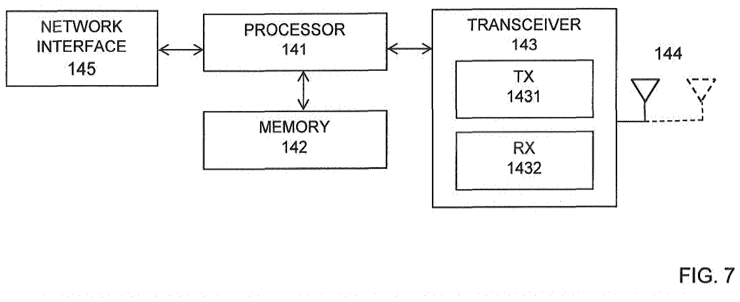

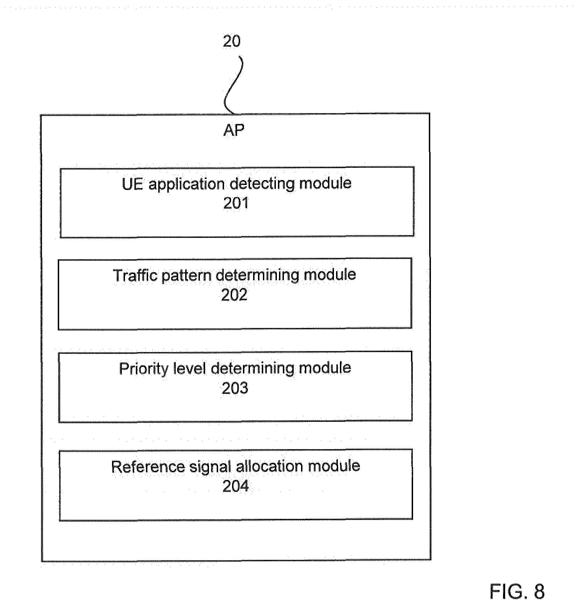

Although the illustrated access point 20 may represent a network node that include any suitable combination of hardware and/or software, these node may, in particular embodiments, represent devices such as the example radio access node illustrated in greater detail by Fig. 7 and Fig. 8. It should be understood that the access network may include any number of access nodes serving any number of wireless communication devices.

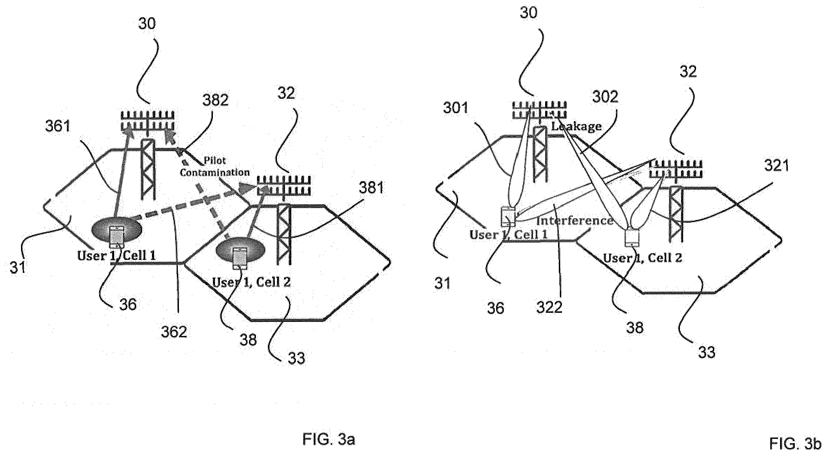

If non-orthogonal RSs are transmitted from UEs in nearby cells on overlapping t-f resources, some of these appear as interference at the AP. In this case, reception of uplink RS at the AP suffers from inter-cell interference at the AP, known as pilot contamination. Thereto, **Fig. 3a** exemplarily shows a first access point 30 constituting or serving a first cell 31 and a second access point 32 serving a second cell 33 adjacent to or nearby the first cell 31. First and second access point 30 and 32 may be similar to access point 20 in Fig. 2. By way of example, a first UE 36 is located in the first cell 31 and a second UE 38 is located in the second cell 33. The uplink reference signal (UL-RS) sent by the UEs can be subdivided each in a useful part (uplink reference signal 361, 381) received by the intended APs and a leaking or contaminating part (uplink reference signal 362, 382) received by unintended AP(s). In the example of Fig. 3a, the first AP 30 receives useful part of first uplink reference signal 361 together with contaminating part of the second uplink reference signal 382. Similarly, the second AP 32 receives useful part of second uplink reference signal 381 together with contaminating part of the first uplink reference signal 362.

Pilot contamination has a detrimental effect on subsequent processing of the data symbols. In the downlink, the AP uses the channel estimates to precode (e.g. beamform) the transmission towards the UE in order to improve the link budget, while minimizing the interference to other UEs (UE-specific beamforming). However with pilot contamination, the channel estimates are linear combinations of all the UEs (i.e. of corresponding non-interfered channel estimates of desired and contaminating UEs) that used the same RS, i.e. both in own and other cells. This causes "leakage" of signal power, reducing the received signal power at the desired UE. At the same time, this leakage appears as interference at the contaminating UEs. For illustration purpose, **Fig. 3b** shows the same cells, access points and UEs as Fig. 3a. By way of example, first UE 36 receives a first useful downlink signal 301 transmitted by the first AP 30 and intended to be received by this UE together with a first contaminating downlink signal 322 transmitted by the second AP 32 and intended to be received by the second UE 38. Similarly, second UE 38 receives a second useful downlink signal 321 transmitted by the second AP 32 and intended to be received by this UE together with a second contaminating downlink signal 302 transmitted by the first AP 30 and intended to be received by the first UE 36.

The effect of pilot contamination on uplink data transmission is analogous to the downlink. In the uplink, the multi-UE received signal at the AP contains interference from UEs in nearby cells even after processing with channel estimates.

In order to avoid above-described pilot contamination and/or signal interference, UEs in nearby RSs may transmit orthogonal RS. Since the number of available uplink RSs is limited, the number of orthogonal RS may get exhausted, if a number of UEs served by an AP exceeds a certain threshold.

If UEs in one cell re-uses the same RS used by another UE in a nearby cell, such re-use may cause pilot contamination as described earlier. Especially, in case of TDD massive MIMO systems, uplink channel estimation is crucial for efficient beamforming.

UEs that use overlapping bandwidth in nearby cells may have a lower probability of transmitting/receiving at the same time if the both have bursty data traffic. Thus, such UEs have smaller probability of contaminating each other's channel estimates. But even with pilot contamination, their data signals may not necessarily overlap in time, and so the leakage may not cause interference in nearby cells.

In other words, even with contaminated CSI leading to directing some of the energy to non-desired users, the erroneously directed signal may not cause harm when the victim users are not receiving useful signal. For such UEs, each AP may allocate uplink RS that are re-used more frequently across the different cells in the network.

Differently, UEs with streaming traffic on the physical layer in nearby cells that use overlapping bandwidth are likely to collide by transmitting/receiving at the same time, unless their signals are beamformed (e.g. precoded/decoded) to mitigate the colliding signals. For such UEs, each AP may allocate uplink reference signals, RS that have a low reuse factor, i.e. these RS are not re-used frequently across the different cells of the network, so that their channel estimates do not contaminate each other.

In the following UEs are considered that use overlapping bandwidth resources across multiple cells. There is a probability that they transmit/receive at the same time as well depending on their traffic pattern. For illustration an exemplary case will be considered where in two nearby cells, a plurality of UEs transmit/receive on overlapping t-f resources. These t-f resources are used for channel estimation and data transmission in the uplink as well as the downlink. It shall be noted that the exact resource elements used for reference symbols or data symbols may be present anywhere on the grid, and need not follow the pattern shown above. In particular, the RS symbols do not necessarily precede data symbols.

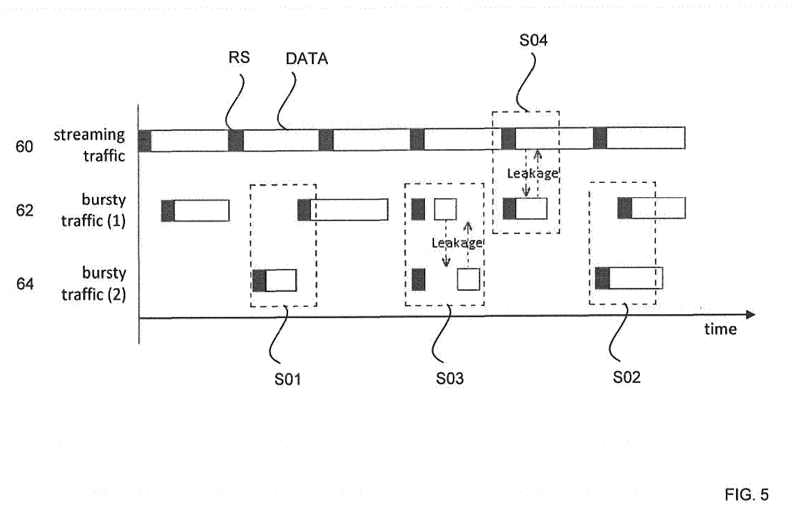

The effect of collision of uplink RS and/or subsequent data transmission from the perspective of UE traffic patterns is illustrated in **Fig. 5** by way of exemplary scenarios. Bay way of example, Fig. 5 shows a diagram with three exemplary traffic patterns 60, 62 and 64 over the time. A first traffic pattern 60 illustrates streaming traffic with alternating short periods of RS transmission and long periods of data transmission forming a continuous stream. A second traffic pattern 62 illustrates exemplary first burst traffic, wherein RS/data transmission shows exemplary first gaps with no transmission. A third traffic pattern 64 illustrates exemplary second burst traffic, wherein RS/data transmission shows exemplary second gaps with no transmission.

The first traffic pattern may be associated with a first UE, the second traffic pattern may be associated with a second UE, and the third traffic pattern may be associated with a third UE. For the following scenarios, it will be assumed that the UEs are connected to nearby cells using non-orthogonal uplink RS.

Four exemplary scenarios S01- S04 depicted in Fig. 5 will be described:
- In a first scenario S01, by way of example involving the second UE and the third UE, there no collision during channel estimation and no collision during data transmission. This may be regarded as best-case scenario and may occur when the (bursty) data requirements for the UEs happen to be separated in time. Even though they use the non-orthogonal RS, there is neither pilot contamination nor leakage of data signal.
- In a second scenario S02, by way of example involving the second UE and the third UE, there is no collision during channel estimation but collision during data transmission. This might occur, for example, when the data scheduled for the UEs is slightly separated in time. In this case, the RS transmission from the UE scheduled first will face no contamination. Thus its subsequent data signal will be properly beamformed, avoiding leakage. This in turn will avoid contaminating the RS transmission from the UE that transmits later, and no contamination will occur.
- In a third scenario S03, by way of example involving the second UE and the third UE, there is collision during channel estimation but no collision during data transmission. This might occur, for example, when the network decides to use common t-f resources for channel estimation (for example channel estimation using Sounding Reference Signal, SRS, symbols). In this case, RS transmissions from the UEs contaminate each other. Thus there will be leakage of data signal power during transmission to/from both UEs. Thus, if both UEs have bursty traffic patterns, their data might not overlap in time; in such case the data signal leakage would not cause any interference.
- In a fourth scenario S04, by way of example involving the first UE and the second UE, there is collision during channel estimation and collision during data transmission. Such scenario may lead both to pilot contamination and part of the beamforming data signal to/from the UEs causes interference with data to/from the UE in other cell. This scenario is expected to occur with even higher probability, if both UEs have streaming traffic patterns.

As can be seen, if one or more UEs of nearby cells are associated to streaming traffic pattern in nearby cells, these UEs may preferably avoid transmitting non-orthogonal RS. This requirement may be relaxed, if only UEs with bursty traffic patterns are involved.

In the following an example of allocating uplink RS based on the UE traffic descriptor (or a priority based on that descriptor) is described.

According to examples, an access point, e.g. access point 20 of Fig. 2 (or any or the access points 30 or 32 of Fig. 3a and Fig. 3b) generates information indicative of a traffic characteristic of its served UEs. Based on the traffic characteristic, UEs may get a certain priority. According to the priority, the AP may assign reference signals to the UEs, e.g. decide to allocate a RS that is orthogonal to those already used in neighboring or nearby cells or closely located or to allocate uplink RS that are re-used more frequently across the different cells in the network.

A traffic characteristic of a UE are indicative of a continuity of the data transmission, burstiness of the data transmission, and/or a (peak) data rate with respect to the physical layer of data transmission associated with the UE.

Burstiness may be regarded as a characteristic of communications involving data that is transmitted intermittently, in bursts, rather than as a continuous stream. To the opposite, streaming traffic may involve data that is transmitted (substantially) continuously.

In an example, different types of continuity or burstiness may be defined.

E.g. a first type (or type 1) may characterize streaming traffic and a second type (or type 2) may characterize bursty traffic.

In an example, AP 20 determines a traffic characteristics associated to an aggregated data traffic associated with the UE (i.e. data traffic of different UE applications transmitting data). Such traffic characteristics information, in the following also being referred to as UE traffic descriptor (or as ue_traffic_descriptor), may thus be indicative of a continuity/burstiness of on aggregated traffic with respect to the UE.

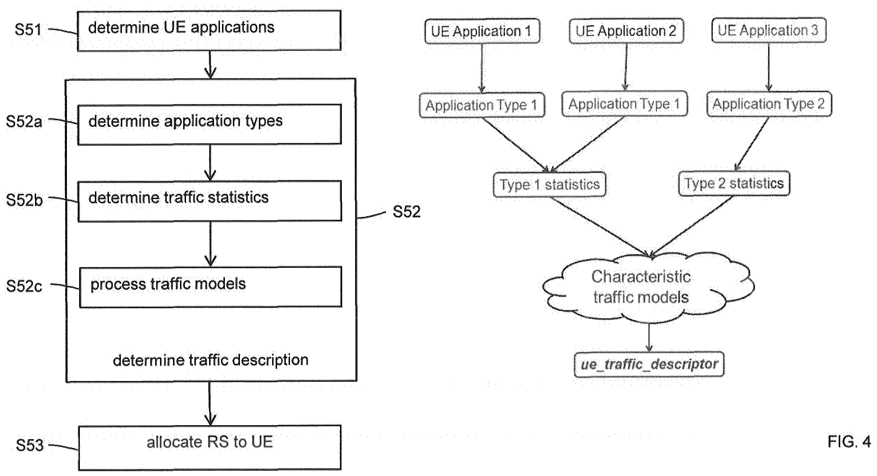

**Fig. 4** shows by way of example, a principle for determining the UE traffic descriptor of a selected UE, e.g. of (first) UE 10 shown in Fig. 2.

Thereto, in a first step S51, AP 20 identifies one or a plurality of UE applications that require data transfer, by way of example 3 UE applications.

In a second step S52, AP 20 determines the UE traffic descriptor indicative of the characteristics of an aggregated traffic with respect to the identified UE applications.

In a third step S53, the AP 20 allocates a RS to the UE, wherein the allocation is performed based on the traffic descriptor.

The second step S52 may be subdivided in further sub steps:
In a first sub step S52a, AP 20 may allocate the identified UE applications to certain application types. By way of example shown in Fig. 4, UE application 1 and UE application 2 way be allocated to application type 1, and UE application 3 may be allocated to application type 2. Such allocation may be performed, for e.g. by way of a lookup table stored at the AP 30 or at any other node within the network.

By way of example the following different application types may be provided:
- application type 1: real time video (streaming);
- application type 2: file download (bursty);
- application type 3: voice call (intermediate).

In a second sub step S52b, AP 20 may retrieve for each of all or some common UE applications types some traffic statistics (e.g. type 1 statistics, type 2 statistics, type 3 statistics), e.g. from an internal or external memory or data base. The traffic statistics may comprise different statistical distributions of the data transmitted, e.g. for each subframe.

In a third sub step S52c, AP 20 may process the retrieved traffic characteristics to generate the UE traffic descriptor that is indicative of aggregated traffic for the UE as discussed above. Such traffic descriptor may be generated by linear combination of the traffic statistics identified for each UE, with appropriate combining weights. The aggregated traffic characteristic may comprise uplink and downlink transmission. Alternatively different characteristics are determined each for uplink and down link.

Steps S51 and S52 may be performed by means of an upper layer function of AP 20, e.g. a function of the IP layer. Step S53 may be performed on MAC layer level. Thereto, the upper layer function may periodically communicate the UE traffic description to the MAC layer.

AP 20 may repeatedly update a list of active UE applications that require uplink/downlink data and perform above-mentioned steps. AP 20 may update periodically and/or on detecting a change of applications of the UE (e.g. on events of the UE starting/closing down applications).

In an embodiment, the AP 20 may perform the RS allocation to the UE based on a priority. Thereto, the AP 20 may classify or rank all the UEs served by the AP, e.g. by assigning each one priority level out of a plurality of priority levels. A classification criterion for the ranking may be derived from the aforementioned traffic descriptor. In one example, such UE traffic descriptor may be indicative of whether the UE traffic is bursty or not. In a more elaborated example, more burstiness levels may be defined, e.g. streaming (no burstiness), low burstiness, medium burstiness, and high burstiness; another classification criterion may be based on the variance of the statistical distribution representing the aggregate traffic (assuming a constant data rate, a higher variance is indicative of higher burstiness). The ranking may be performed such that lower bursty aggregated traffic leads to higher ranking. Thus, UEs with streaming aggregated traffic maybe ranked top of the list, whereas UEs with high bursty aggregated traffic are ranked low.

Another classification criterion may be a level of emergency (e.g. 2 levels: emergency or no emergency). Thus, UEs with emergency traffic maybe ranked top of the list, whereas other UEs may be ranked low.

Another classification criterion may be a level of a given priority or a level of a (guaranteed or promised) Quality of Service (QoS), e.g. according a subscription associated to the UE. Thus, some may have subscribed to a privileged ranking.

The above-mentioned peak data rate may be also regarded as a quality of service criterion, such that a high peak data rate (potentially) leads to a higher ranking.

The AP 20 may perform the ranking based on one of these criteria or a combination of these criteria. As an example, a UE having streaming traffic, emergency traffic and a privileged subscription may be assigned to the highest priority, whereas a UE having bursty aggregated traffic, no emergency and no privileges may be assigned to the lowest priority.

Based on such priority, AP 20 may assign RS to individual UEs. Examples are being described in more detail below.

The UEs with streaming/constant bit rate traffic are expected to be scheduled over several contiguous transmission intervals. Therefore they may be allocated orthogonal RSs for non-contaminated channel estimates at their respective APs. Differently, a probability that UEs in nearby cells both with bursty data traffic will transmit over the same time intervals may be rather low probability. Thus, such UEs are good candidates for sharing the same RS sequences in nearby cells.

In the following exemplary RS allocation schemes to mitigate a pilot contamination, and/or its impact on subsequent data transmission are discussed. Thereto RS allocation is performed taking into account afore-described UE traffic descriptor.

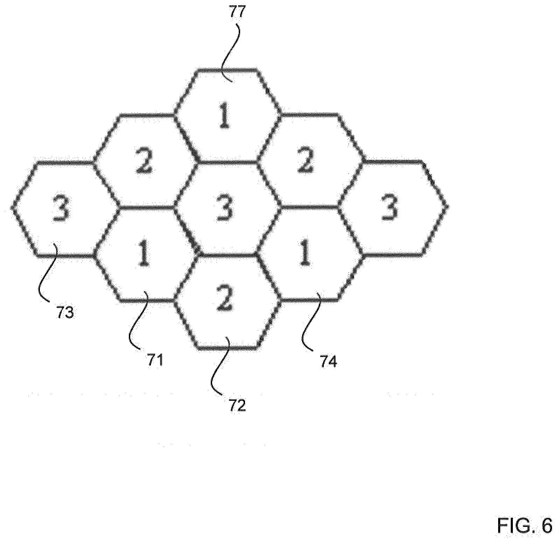

In an example a kind of soft reuse of uplink RSs is performed. Thereto, each cell may identify a set of primary uplink RSs that are not used in cells of a certain area, e.g. in nearby cells. Such identification may be performed by physical layer functions, PHY, of the AP 20. Such RSs may typically be mapped to the cell ID of the AP. For illustration, a primary RS reuse factor of 3 may be considered. A fraction of the available RSs are reserved as primary RSs and distributed among the cells according to the pattern in Fig. 6. Fig. 6 by way of example shows a plurality of cells where numbers 1, 2 and 3 are assigned such that neighboring cells do not have the same numbers. Primary RSs may not re-used by neighboring cells, i.e. by cells having different numbers. As example, a RS used by cell 71 may not re-used by cells 72 and 73 but by cells 74 and 77. Thus, cells with different numbers do not cause pilot contamination to the primary set of RSs.

The remaining RSs (secondary RSs) may be not reserved, and can be used by every cell. In other words, the remaining RSs have a reuse factor 1. Clearly, the UEs assigned a primary RS are expected to suffer lower pilot contamination than the other UEs.

The AP 20 may perform a ranking of UEs based on the UE traffic descriptor (or the priority based on that descriptor). The ranking of the UEs may be performed as a function of the traffic continuity characteristic (streaming/bursty) and a priority. Bu way of example, EUs associated with streaming traffic and/or assigned to a high priority may be ranked high (at top of a list), whereas UEs with bursty traffic and assigned to low priory may be ranked low (other UEs may be ranked somewhere in-between). The AP may then pick the highest ranked UE (at the top of the list) and allocate it to a RS randomly selected from the primary RSs. It may then continue this process for the next highest ranked UE. Such process may be performed iteratively for the UEs in the list until all the primary RS sequences are exhausted. If there are more UEs on the list, they are similarly allocated to a randomly selected secondary RS.

An advantage of such approach is that it may mitigate pilot contamination without requiring any coordination from surrounding cells.

However, this scheme may be adaptive only on a quite large time scale, when the distribution of primary RSs might be updated across the network. Further, it reserves a fraction of available RSs within each cell, which may not be used at all in cases with a small number of served UEs (e.g. a number smaller that the number of available primary RS).

In another example, an uplink RS allocation using inter-cell coordination is employed. In this example, all uplink RSs are free to be allocated in every cell. Each AP may periodically share a list of RSs allocated to UEs in its cell and the corresponding UE traffic descriptor with nearby APs. While allocating a RS, the AP analyzes information from nearby cells to arrive at the best RS allocation option. For a UE with emergency or streaming traffic, it may choose to use a RS that is being reused in the least number of nearby cells. In case of bursty traffic, it may prefer to allocate a RS that are being used by UEs with bursty traffic pattern in nearby cells.

An advantage of this example is that it may allow a good resource distribution across several cells. However, it requires a certain control overhead, e.g. induced by a periodic exchange of information between the APs.

As shown in **Fig. 7****,** the example access point 20 includes a node processor 141, a node memory 142, a node transceiver 143, one or a plurality of node antennas 144 and a network interface 145. The node processor 141 is coupled to the node memory 142, to the network interface 145 and the node transceiver 143 that is coupled to the one or the plurality of node antennas 144. The node transceiver 143 comprises a transmission circuit TX 1431 and a receiver circuit RX 1432. In particular embodiments, some or all of the functionality described above as being provided by a base station, a node B, an enhanced node B, and/or any other type of access network node may be provided by the node processor executing instructions stored on a computer-readable medium, such as the node memory 142. Alternative embodiments of the access point 20 may include additional components responsible for providing additional functionality, including any of the functionality identified above and/or any functionality necessary to support the solution described above.

As shown in **Fig. 8****,** the example AP 20 includes the following exemplary functional units:
- an application detecting module 201, e.g. associated to an IP layer, adapted to detect or identify one or a plurality of UE applications that require data transfer;
- a traffic type determine module 202, e.g. associated to the IP layer, adapted for generating a descriptor indicative of the characteristics of an aggregated traffic with respect to the identified UE applications;
- and a priority level determining module 203, e.g. associated to the IP layer, adapted for associating a priority level to the UE, wherein the priority level is based on the descriptor, and
- a reference signal allocation module 204 adapted for allocating an uplink reference signal to the UE based on the priority level.

## Claims

1. A method implemented by an access point (20) for allocating an uplink reference signal to a user equipment, UE (10, 12, 14), located in a cell area comprising one or a plurality of cells served by one or a plurality of access nodes (20), comprising:
• determining one or a plurality of active applications of the UE (10, 12, 14),
• determining a traffic characteristic associated to the one or the plurality of active applications, wherein the traffic characteristic associated to the one or the plurality of active applications of the UE (10, 12, 14) includes an indication of a continuity of the data transmission, burstiness of the data transmission, and/or a peak data rate with respect to a physical layer of the data transmission associated with the UE (10, 12, 14),
• associating a priority level to the UE (10, 12, 14), wherein the priority level is based on the traffic characteristic,
• determining if the priority level of the UE (10, 12, 14) is above a certain priority level, and
• if the priority level is above the certain priority level, allocating an uplink reference signal to the UE that is orthogonal to all the other reference signals currently assigned to other UEs in the cell area, otherwise, allocating an uplink reference signal to the UE that is not orthogonal to all the other reference signals currently assigned to other UEs in the cell area.

2. The method of the preceding claim, wherein the traffic characteristic for an application is determined by determining an application type, and retrieving the traffic characteristic from a memory (142) keeping stored a plurality of traffic characteristics each associated to one of different application types.

3. The method of anyone of the preceding claims, further comprising:
• determining the traffic characteristic associated to the one or the plurality of active applications comprises determining a level of burstiness of transmitted and/or received data.

4. The method of anyone of the preceding claims, wherein determining the traffic characteristic associated to the one or the plurality of active applications further comprising at least one of:
• determining an emergency level of the one or the plurality of active applications, wherein the emergency level comprise two levels: a first level associated to emergency traffic and a second level associated to non-emergency traffic; and
• determining a subscription level; wherein the subscription level comprise two levels: a first level associated to a privileged handling and a second level associated to a non-privileged handling.

5. The method of the preceding claim, wherein allocating the uplink reference signal is further based on at least one of: the emergency level and the subscription level.

6. The method of anyone of the preceding claims, wherein the reference signal is one of a: demodulation reference signal and a sounding reference signal as defined in 3GPP LTE specifications.

7. An access point (20) comprising a memory (142) and a processor (141), wherein the processor is adapted to carry out the steps of anyone of claims 1-6.

8. A computer program comprising instructions being stored in a memory (142) accessible by the access point (20) which, when executed on at least one processor (141) of the access point, cause the at least one processor to carry out the steps of anyone of claims 1- 6.

## Patentansprüche

1. Verfahren, das von einem Zugangspunkt (20) implementiert wird, um einem Benutzergerät, UE (10, 12, 14), das sich in einem Zellenbereich befindet, der eine oder mehrere Zellen umfasst, die von einem oder mehreren Zugangsknoten (20) bedient werden, ein Uplink-Referenzsignal zuzuordnen, umfassend:
• Bestimmen einer oder mehrerer aktiver Anwendungen des UE (10, 12, 14),
• Bestimmen einer Verkehrscharakteristik, die der einen oder den mehreren aktiven Anwendungen zugeordnet ist, wobei die der einen oder den mehreren aktiven Anwendungen des UE (10, 12, 14) zugeordnete Verkehrscharakteristik eine Anzeige einer Kontinuität der Datenübertragung, einer Burstartigkeit der Datenübertragung und/oder einer Spitzendatenrate in Bezug auf eine physikalische Schicht der dem UE (10, 12, 14) zugeordneten Datenübertragung umfasst,
• Zuordnen einer Prioritätsstufe zu dem UE (10, 12, 14), wobei die Prioritätsstufe auf der Verkehrscharakteristik basiert,
• Bestimmen, ob die Prioritätsstufe des UE (10, 12, 14) oberhalb einer bestimmten Prioritätsstufe liegt, und
• wenn die Prioritätsstufe oberhalb der bestimmten Prioritätsstufe liegt, Zuweisen eines Uplink-Referenzsignals zu dem UE, das orthogonal zu allen anderen Referenzsignalen ist, die derzeit anderen UEs in dem Zellenbereich zugewiesen sind, andernfalls Zuweisen eines Uplink-Referenzsignals zu dem UE, das nicht orthogonal zu allen anderen Referenzsignalen ist, die derzeit anderen UEs in dem Zellenbereich zugewiesen sind.

2. Verfahren nach dem vorhergehenden Anspruch, wobei die Verkehrscharakteristik für eine Anwendung durch Bestimmen eines Anwendungstyps und Abrufen der Verkehrscharakteristik aus einem Speicher (142) bestimmt wird, in dem mehrere Verkehrscharakteristiken gespeichert sind, die jeweils einem von verschiedenen Anwendungstypen zugeordnet sind.

3. Verfahren nach einem der vorhergehenden Ansprüche, ferner umfassend:
• Bestimmen der der einen oder den mehreren aktiven Anwendungen zugeordneten Verkehrscharakteristik, das das Bestimmen einer Stufe der Burstartigkeit von gesendeten und/oder empfangenen Daten umfasst.

4. Verfahren nach einem der vorhergehenden Ansprüche, wobei das Bestimmen der Verkehrscharakteristik, die der einen oder den mehreren aktiven Anwendungen zugeordnet ist, ferner mindestens eines von umfasst von:
• Bestimmen einer Notfallstufe der einen oder der mehreren aktiven Anwendungen, wobei die Notfallstufe zwei Stufen umfasst: eine erste Stufe, die dem Notfallverkehr zugeordnet ist, und eine zweite Stufe, die dem Nicht-Notfallverkehr zugeordnet ist; und
• Bestimmen einer Abonnementstufe, wobei die Abonnementstufe zwei Stufen umfasst: eine erste Stufe, die einer privilegierten Handhabung zugeordnet ist, und eine zweite Stufe, die einer nicht privilegierten Handhabung zugeordnet ist.

5. Verfahren nach dem vorhergehenden Anspruch, wobei das Zuweisen des Uplink-Referenzsignals ferner auf mindestens einem basiert von: der Notfallebene und der Abonnementebene.

6. Verfahren nach einem der vorhergehenden Ansprüche, wobei das Referenzsignal eines ist von: einem Demodulationsreferenzsignal und einem Sondierungsreferenzsignal, wie in den 3GPP-LTE-Spezifikationen definiert.

7. Zugangspunkt (20), der einen Speicher (142) und einen Prozessor (141) umfasst, wobei der Prozessor dazu eingerichtet ist, die Schritte nach einem der Ansprüche 1 bis 6 auszuführen.

8. Computerprogramm, das Anweisungen umfasst, die in einem Speicher (142) gespeichert sind, auf den der Zugangspunkt (20) zugreifen kann, und die bewirken, wenn sie auf mindestens einem Prozessor (141) des Zugangspunkts ausgeführt werden, dass der mindestens eine Prozessor die Schritte nach einem der Ansprüche 1 bis 6 ausführt.

## Revendications

1. Procédé mis en œuvre par un point d'accès (20) pour attribuer un signal de référence de liaison montante à un équipement utilisateur, UE (10, 12, 14), situé dans une zone cellulaire comprenant une ou une pluralité de cellules desservies par un ou une pluralité de nœuds d'accès (20), comprenant :
• la détermination d'une ou d'une pluralité d'applications actives de l'UE (10, 12, 14),
• la détermination d'une caractéristique de trafic associée à l'une ou à la pluralité d'applications actives, dans lequel la caractéristique de trafic associée à l'une ou à la pluralité d'applications actives de l'UE (10, 12, 14) comporte une indication d'une continuité de la transmission de données, d'une sporadicité de la transmission de données, et/ou d'un débit de données de crête par rapport à une couche physique de la transmission de données associée à l'UE (10, 12, 14),
• l'association d'un niveau de priorité à l'UE (10, 12, 14), dans lequel le niveau de priorité est basé sur la caractéristique de trafic,
• le fait de déterminer si le niveau de priorité de l'UE (10, 12, 14) est supérieur à un certain niveau de priorité, et
• si le niveau de priorité est supérieur au certain niveau de priorité, l'attribution d'un signal de référence de liaison montante à l'UE qui est orthogonal à tous les autres signaux de référence actuellement attribués à d'autres UE dans la zone cellulaire, sinon, l'attribution d'un signal de référence de liaison montante à l'UE qui est non orthogonal à tous les autres signaux de référence actuellement affectés à d'autres UE dans la zone cellulaire.

2. Procédé selon la revendication précédente, dans lequel la caractéristique de trafic pour une application est déterminée en déterminant un type d'application, et en extrayant la caractéristique de trafic d'une mémoire (142) conservant en mémoire une pluralité de caractéristiques de trafic chacune associée à l'un parmi différents types d'application.

3. Procédé selon l'une quelconque des revendications précédentes, comprenant en outre :
• la détermination de la caractéristique de trafic associée à l'une ou à la pluralité d'applications actives comprend la détermination d'un niveau de sporadicité de données transmises et/ou reçues.

4. Procédé selon l'une quelconque des revendications précédentes, dans lequel la détermination de la caractéristique de trafic associée à l'une ou à la pluralité d'applications actives comprenant en outre au moins un élément parmi :
• la détermination d'un niveau d'urgence de l'une ou de la pluralité d'applications actives, dans lequel le niveau d'urgence comprend deux niveaux : un premier niveau associé au trafic d'urgence et un second niveau associé au trafic non urgent ; et
• la détermination d'un niveau d'abonnement ; dans lequel le niveau d'abonnement comprend deux niveaux : un premier niveau associé à un traitement privilégié et un second niveau associé à un traitement non privilégié.

5. Procédé selon la revendication précédente, dans lequel l'attribution du signal de référence de liaison montante est en outre basée sur au moins l'un parmi : le niveau d'urgence et le niveau d'abonnement.

6. Procédé selon l'une quelconque des revendications précédentes, dans lequel le signal de référence est l'un parmi : un signal de référence de démodulation et un signal de référence de sondage tels que définis dans les spécifications 3GPP LTE.

7. Point d'accès (20) comprenant une mémoire (142) et un processeur (141), dans lequel le processeur est conçu pour effectuer les étapes selon l'une quelconque des revendications 1 à 6.

8. Programme informatique comprenant des instructions étant stockées dans une mémoire (142) accessible par le point d'accès (20) qui, lorsqu'elles sont exécutées sur au moins un processeur (141) du point d'accès, amènent l'au moins un processeur à effectuer les étapes selon l'une quelconque des revendications 1 à 6.
